# EUROPEAN PATENT APPLICATION

(11) **EP 3 693 918 A1**
(43) Date of publication of application: **12.08.2020**
(21) Application number: 19156233.9
(22) Date of filing: 08.02.2019
(51) Int. Cl.: G06Q 50/06, H02J 13/00, G05B 15/02

(54) **OPERATIONAL DATA OF AN ENERGY SYSTEM**

(71) Applicant: Siemens Gamesa Renewable Energy A/S, 7330 Brande (DK)
(72) Inventor: The designation of the inventor has not yet been filed
(74) Representative: Aspacher, Karl-Georg

(57) **Abstract**

The present invention relates to handling operational data of an energy system utilizing a distributed database. Operational data of a node of an energy system is obtained of each of a plurality of predetermined time intervals. The operational data of the node is stored in a distributed database for each of the plurality of predetermined time intervals, wherein the operational data of each of the plurality of predetermined time intervals comprises time data identifying the respective time interval.

## Description

### Technical field

Various examples of the invention generally relate to operational data of an energy system. Various examples specifically relate to handling operational data of an energy system utilizing a distributed database.

### Background

Common energy systems are designed as networks for delivering energy, in particular electrical energy, from and to nodes in the energy system. In general, an energy system comprises all components related to the production, conversion, delivery, and use of energy.

In some cases, when planning a power plant, a complex siting process is required based on environmental data. In the specific case of a wind farm, environmental data comprises wind data and the specific topography in the area where the wind turbine generators are planned. Accordingly, high quality, and reliability of the wind data is key to successful planning of the wind farm.

In common planning processes wind data may be obtained using weather masts, weather models and simulations, light detection and ranging (LIDAR) applications, specified turbine performance data, or met mast campaigns (or in other words site measurement campaigns), as will be described in the following.

Weather masts are placed very densely in Europe. Their main disadvantage is that they are not suited for wind energy, as their height is usually only 10 m, whereas wind turbines reach total heights of 200 m, and more. Therefore, weather masts do not provide good estimates for wind speed, wind shear, turbulence intensity, wind veer, and similar wind characteristics.

Weather models and simulations are numerical models simulating the wind conditions, provided in some cases by forecasting methods and service providers, for example ConWx, WAsP, WindPRO, or OpenWind. However, models and simulations inherently have errors, such as biases and uncertainties. Uncertainties might balance with increasing data size, wherein biases are more critical. Furthermore, weather models are not understood perfectly yet. Providers and consultants perform wind analysis studies, however they apply models and incorporate their own experience, i.e. opinions, into the results.

LIDAR (also called Lidar or LiDAR) is used as an acronym for light detection and ranging, sometimes also light imaging, detection, and ranging. LIDAR measurements for determining atmospheric or wind characteristics gain in popularity, because they are short and do not require a lot of planning. Doppler LIDAR is a surveying method that use measuring backscattered light from the atmosphere, in order to measure temperature and/or wind speed along the beam by taking into account the frequency of the backscattered light. However, measurements based on LIDAR systems exhibit systematic offsets and biases between different measurement devices and methods.

Met mast campaigns may be a source of useful reference data, in order to determine site conditions. The height of such met masts may be up to hub height of planned wind turbines. They have wind speed measurements on different heights, which enables shear calculation. However, these campaigns require a long planning period and are extremely costly. If there are rather small than large wind farms, it is commercially not feasible to perform a met mast campaign. Therefore, as met mast campaigns are commonly very costly, such campaigns are usually, depending on market, carried out in a rather short time period, e.g. just several months. Usually, they do not cover a full year, which would be required to understand all seasonal effects of a specific site.

For example, a measurement campaign might be performed in advance of wind farm installation. In countries like Germany usually never a measurement campaign is performed. In other sites, like Australia, measurements are performed which have several met masts and cover several years. The range of uncertainty is very large. Even if a wind measurement campaign is performed, there is a time-mismatch since measurement is performed before installation and one should not assume that conditions stay the same over decades. It does not cover changes within 20 years of turbine lifetime, e.g. tree growth, other wind farm installations. Such measurements are usually performed based on met masts, which mostly have heights much below 100 m, whereas turbines often have hub heights of >140 m. For cost reasons, LIDAR measurements are more often performed than met mast campaigns. The used LIDAR devices have inherent technical problems due to the measurement principles they are based on, i.e. they are usually averaging a huge area for wind speed measurement, and, therefore, have a high measurement uncertainty.

Turbine performance data of deployed wind turbines for the specific use case on-site is commonly not available. For turbine performance, a power curve measurement according to IEC 61400-12-1 might be performed, e.g. by the OEM or another test facility, which may be referred to as specified turbine performance data. This performance data has a high acceptance in the industry, however it is known to have certain shortcomings. Reference measurements are usually performed in a very short period of time and are not representative for all seasons. Usually, measurements are performed in winter, although performance of the wind turbines in summer do not reach the same level. Additionally, measurements are performed in "good" sites, usually in northern Europe. This brings the problem that sites with e.g. low air densities, special wind shear profiles, extremely low / extremely high turbulence intensities, and the like, are not represented very well. Therefore, data quality of wind turbines is poor.

Consequently, the data originating from the above-mentioned sources potentially does not have the necessary quality and reliability to ensure the right outcomes of siting processes, wherein in particular a number of restrictions and drawbacks are known.

Actual operational data of a wind turbine on-site may also be used to provide information about performance over a certain period of time at a specific location. This is to our knowledge the most reliable technical solution, but it comes with drawbacks, due to which, conventionally, operational data from existing wind farms is hardly used.

Reasons for low utilization of existing operational data are among the following. The data owner may not be known to an interested buyer. The data quality of existing data may not be known to an interested buyer. There may a possible incentive for data owner to manipulate the data. There is no exchange platform, i.e. a market place for these data as of now. The buyer cannot be sure if data is not manipulated, because the owner of the data, i.e. the owner of wind farm, is not trustworthy. If parties still agree to exchange data, the buyer needs to trust the seller that data or parts of it were not manipulated.

Data manipulation may occur under specific circumstances. According to an example, the assumption is made that a wind farm owner wants to sell an existing wind farm. The owner has several years of experience on this specific site wind conditions and actual turbine performance. A potential buyer is interested in buying the complete site including existing turbines for self-operation of the farm. A potential buyer might be only interested in buying the meteorological data for other use-cases (e.g. weather forecast). A potential buyer may be interested in buying the site without turbines to repower with turbines that are more modern. In this scenario, there may also be a potential second buyer interested in buying just the turbines for future use.

Independently from the number of buyers, there is an information asymmetry. The wind farm owner knows everything about actual site wind conditions and turbine performance. The buyer(s) know little about actual conditions and performance.

The price of site and/or turbines correlates positively with site wind conditions and turbine performance. The better the performance and/or the better the wind conditions the higher the price. Thus, there is an incentive for the owner to inflate conditions and turbine performance to get a better price. There are technical ways to inflate conditions and performance, as we will show later. The buyer does know about information asymmetry, and the incentive of the owner to inflate conditions and performance. The buyer will thus add a bias and/or uncertainty to cover this, e.g. by including a correction factor for the uncertainty into the calculation. This increases financing costs and overall project costs.

According to conventional methods, trust may be created in a "repeated game-situation", meaning that buyer and owner will have several "games" (transactions) over time. In this scenario, trust may be rewarded. However, depending on the market situation, this scenario might not be very likely.

With current technology, there is no trust between parties and it is technically not possible to create trust. Parties are risk-averse and need to insure against risks. Thus, missing trust results in higher costs for buyer, lower revenue for seller.

This information asymmetry also exists for the first installation of a site. In that case, the involved parties are wind farm planner and wind turbine OEM, in which wind turbine OEM does know a lot of turbine performance and the planner knows little about it. The OEM has an incentive to inflate performance.

Conventional techniques for operational data of an energy system, in particular for handling, storing and providing operational data of energy suppliers and consumers, such as data about turbine performances of a wind farm site, have the risk of being manipulated, and, therefore, include the problems of low data security, unreliable data storage, and slow data availability when retrieving data at a later point of time, so that the respective operational data often is not relied upon and used. This results in either high-risk mark-ups, under-optimized wind farm set up, and/or underperfomance of turbines and parks.

The documents US 8,531,247 B2, US 8,892,616 B2, US 8,300,811 B2, US 9,147,088 B2, US 9584311 B2, EP 2976707 B1, EP 2 605 445 B1, EP 2 870 565 A1, EP 2 891 102 A1, WO 2017137256 A1, EP 2870565 B1, EP 3028140 B1, EP 17175275 and US 8 843 761 B are known.

### Summary

Accordingly, there is a need of advanced techniques for handling operational data of an energy system. Specifically, there is a need for techniques, which overcome or mitigate at least some of the above-identified restrictions and drawbacks.

It is therefore an object of the present invention to provide such an improved device, a respective method, energy system and computer program product, which provide improved handling of operational data of an energy system.

This object is solved by the subject matter of the independent claims. Further advantageous features are subject matter of the dependent claims.

According to an aspect, a device is configured for handling operational data of an energy system. The device comprises a memory and at least one processing unit wherein the memory contains instructions executable by said at least one processing unit, wherein execution of the instructions causes the device to execute the following steps.

In a first step, operational data of a node of an energy system is obtained, or in other words received from the node, for each of a plurality of predetermined time intervals. In other words, for each predetermined time interval, operational data of the node may be received, which may describe, or define, or be the result of, an operation of the node within the predetermined time interval. In particular, operation of the note may be any operation related to consuming energy from or supplying energy to the energy system.

In another step, for each of the plurality of predetermined time intervals, the obtained operational data of the node is stored in, or into a distributed database. Storing the operational data of each one of the plurality of predetermined time intervals may refer to entering the respective operational data into the database as separate database entry.

The operational data of each of the plurality of predetermined time intervals may comprise time data, which identifies the respective time interval. In other words, for each time interval, the operational data of the respective time interval comprises respective time data, which describes or identifies the period of time, in which the operation corresponding to the operational data was performed. The time data may be in a time format, as known to a person skilled in the art, wherein the time data may comprise at least one point of time, may describe a time span or period of time, or may comprise two points of time, such as a beginning point of time and/or an end point of time. In such a way, the time data may describe the time interval, in particular in an absolute way, comprising at least a date and/or a time, which can be used to search the operational data within the database. The time data may be at least one timestamp, as known to a person skilled in the art. Therein, the timestamp may be in a time format and may identify a period of time or a point of time when the operational data was recorded.

Thereby an improved device for handling operational data of an energy system is provided, which ensures high quality and reliability of the operational data.

Operational data of an energy system, which is resilient against unauthorized data corruption, may thus be provided. Therefore, operational data stored in the database, according to the invention, may be a reliable information source for planning a node at a specific location, wherein the operational data may be used for siting processes of either a reuse of the same area for a new node, which, in the case of a wind farm may be referred to as repowering, or may be used for transfer the data insights on surrounding new areas, or sites, by means of inter- and / or extrapolation methods, and may therefore enable a platform or marketplace for trading operational data.

Generally, the trust level between the participating parties may thereby increase, in other words, with a technical solution according to the invention, it is possible to create the trust necessary for buyer to trust owner's data. Therefore, with this technology the missing-trust issue and lower financing costs for our customers may be overcome, which may result in a win-win situation between the buyer and the seller of the operational data.

Such an approach may be based on the finding that handling of operational data, according to the invention, has a low risk of being manipulated. Accordingly, data security and reliable data storage may be improved, and the data availability for retrieving data from the database at a later point of time may be faster, compared to conventional techniques of handling operational data in an energy system, so that the respective operational data will may be relied upon. This may result in low-risk mark-ups, optimized node set up, and/or optimal performance of nodes in an energy system.

According to a further aspect, a method for handling operational data of an energy system comprises the following steps. In a first step, operational data of a node of an energy system is obtained for each of a plurality of predetermined time intervals. In a second step, for each of the plurality of predetermined time intervals, the operational data of the respective time interval is stored in a distributed database. The operational data of each of the plurality of predetermined time intervals comprises time data identifying the respective time interval.

According to a further aspect, operational data of each of a plurality of nodes of an energy system is obtained, for each of a plurality of predetermined time intervals. For each of the plurality of time intervals, operational data of each of the plurality of nodes is obtained. For each of the plurality of time intervals, the operational data of the plurality of nodes is stored in a distributed database, wherein advantageous features as described for a single node may be accordingly applied for each of the plurality of nodes respectively.

The operational data of each of the plurality of predetermined time intervals may comprise the following data.

The operational data may comprise sensor data, which is measured by at least one sensor, which may be included in the node, or which may be arranged at, or in proximity to, the node. The sensor may be a physical sensor and/or may be a virtual sensor. The sensor data may be measured by the at least one sensor within each, or in other words the respective one, of the plurality of predetermined time intervals. In various examples, the sensor data is sensor measurement data. The sensor data may include data of one or more sensors, or in other words information, about the ambient environment of the node, which is particular for the location of the node, and/or the performance of the node, in particular the electrical performance of the note, which is prevalent within the time interval.

In various examples, the sensor data may comprise one or more selected from the group consisting of: wind speed data, wind direction data, ambient temperature data, active power data, reactive power data, and air density data.

By storing the operational data in a distributed database, the respective sensor data is reliably stored in a centralized way, wherein the data cannot be manipulated and has high trust when it is made available to a third party at a later point of time.

The operational data of each of the plurality of predetermined time intervals includes one or more of mean, standard deviation, minimum, and maximum, over the respective time interval. In various examples, the sensor data of each time interval is averaged over the time interval. Thereby, the operational data may include statistical measures, usually used in searches of the distributed database.

The operational data of each of the plurality of predetermined time intervals may comprise sensor data, which is sensor measurement data measured by at least one sensor included in, or arranged at, the node, in each of the plurality of predetermined time intervals, or the operational data may not comprise the sensor data itself, but a hash value of the sensor data, wherein a hash value may refer to the output of a common hash function as used to map data of arbitrary size to data of a fixed size, as known to a person skilled in the art. In that way, the distributed database may enable full replication, or partial replication of the operational data, wherein or data of interest or necessary for searching and selecting relevant data from the database e.g. for a buyer may be fully replicated, and the data related to the sensor data is represented by a hash value.

By replacing the raw sensor data by a hash value of the sensor data in the distributed database, data traffic and data storage size may be reduced, such that the database remains operable in a fast and efficient way.

The operational data of each of the plurality of predetermined time intervals may comprise one or more selected from the group comprising a node identity uniquely identifying the node, location data identifying the geographical location of the node in the time interval, and specification data describing the technical specifications of a technical system of the node. These are data, which can be used for facilitated identifying the relevant data in the database, which can be used for example in planning new nodes or a siting process for a new node.

The operational data of each of the plurality of predetermined time intervals may be stored independently, or in other words separately, from each other in the distributed database. The operational data of each time interval may be separate data entry in the distributed database. The operational data for each time interval may be stored or entered into the distributed database at a point of time, which is different from the points of time of other operational data entries of other time intervals. In various embodiments, the operational data of each time interval may be received directly after the respective time interval, independently from the operational data of other time intervals. In various embodiments, the operational data may be stored at substantially the time when it is recorded.

By obtaining, and/or storing the operational data of each time interval separately, as described above, data manipulation of the operational data may be efficiently prevented.

The node may be a wind turbine generator. The operational data may comprise SCADA data of the node, in particular the SCADA data may be provided in a plurality of equal time intervals, specifically 10 minutes. In particular, safe and reliable storage of SCADA data of each time interval may be enabled, which cannot easily be manipulated.

The plurality of predetermined time intervals may be consecutive time intervals, and/or equal time intervals, in particular the time intervals may be 10 minutes. In various examples, the plurality of predetermined time intervals correspond to the time intervals in which SCADA data of the node is available.

The distributed database may be a distributed ledger, and or may be a blockchain-based database comprising at least one blockchain, and/or may be a common blockchain. The blockchain may be a permissioned blockchain, which may be accessible only within the energy system, in other words for authorized parties, or a public blockchain, which may be accessible by parties outside the energy system such as potential buyers of operational data.

Storing the operational data of each time interval into the blockchain may refer to logging the operational data in the blockchain, wherein for each time interval, in other words every time interval or after each time interval, a separate block of the blockchain is created, in other words mined or sealed.

In other words, storing the operational data may comprise logging the operational data in a blockchain, in particular sealing and/or mining a separate blockchain data block for each of the plurality of predetermined time intervals, comprising the operational data.

According to various examples, for each time interval, a separate database node of the energy system may obtain operational data of a plurality of nodes and may seal a data block of a blockchain containing the operational data of the nodes, comprising the node identities of the node, the sensor data, and the respective time data of the time interval.

The operational data may include encrypted data and unencrypted data, wherein the unencrypted data includes one or more of the group consisting of: a node identity, location data, specification data, and time data. The encrypted data may include the sensor data.

By encrypting sensitive data, such as the sensor data, the blockchain may be made accessible to the public or to potential buyers of the data, wherein privacy of the data remains intact. Furthermore, potential buyers of data may search the database for interesting data entries by searching the unencrypted data.

The unencrypted data in each blockchain data block may be encrypted with an autogenerated encryption key using a synchronous encryption algorithm. The autogenerated encryption key may be a different key for each time interval, and may be generated automatically for each time interval, or for each blockchain data block.

The operational data of each of the plurality of predetermined time intervals may be stored in the distributed database encrypted with a public key of the data owner using an asynchronous encryption algorithm.

The operational data may be retrieved from the distributed database. In various examples, retrieving the operational data comprises retrieving at least a part of the operational data, in other words the operational data of at least one or more time intervals, specifically using one or more of the group consisting of the time data, the node identity, the location data, and the specification data.

According to a further aspect, a computer program product comprises program code. The program code is executable by at least one processor. Executing the program code causes the at least one processor to perform one of the methods for handling operational data of an energy system according to one of the methods described above.

According to a further aspect, an energy system comprises a plurality of nodes connected with at least one device for handling operational data of an energy system as described above.

According to a further aspect, a computer readable storage medium comprises a computer program product as described above.

According to a further aspect, a platform and/or a system for data exchange is provided, wherein the system and/or platform comprises at least one distributed database and is configured for carrying out one of the methods as described above.

For such a method, computer program product, energy system, platform for data exchange, and computer readable storage medium, for handling operational data of an energy system, technical effects may be achieved, which correspond to the technical effects described for the device for handling operational data of an energy system above.

Although specific features described in the above summary and the following detailed description are described in connection with specific embodiments and aspects of the present invention, it should be understood that the features of the exemplary embodiments and aspects may be combined with each other, and correlate to each other, unless specifically noted otherwise. It is further to be appreciated that explanations, definitions, and features described for a specific aspect or embodiment, or for various examples, in the present disclosure apply to all aspects, embodiments, and examples of the present disclosure, and are not intended to be limited to a specific aspect, embodiment or specific examples, unless noted otherwise.

Therefore, the above summary is merely intended to give a short overview over some features of some embodiments and implementations and is not to be construed as limiting. Other embodiments may comprise other features than the ones explained above.

### Brief description of the drawings

The above and other elements, features, steps, and characteristics of the present disclosure will be more apparent from the following detailed description of embodiments with reference to the following figures:
Figure 1 illustrates a schematic drawing of a device, according to embodiments of the invention;
Figure 2 illustrates a schematic drawing of block interconnection in a blockchain, according to embodiments of the invention;
Figure 3 illustrates a schematic drawing of consensus finding in a distributed database, according to embodiments of the invention;
Figure 4 illustrates a schematic drawing of data encryption in a distributed database, according to embodiments of the invention;
Figure 5 illustrates a further schematic drawing of data encryption in a distributed database, according to embodiments of the invention;
Figure 6 illustrates a schematic drawing of an energy system, according to embodiments of the invention;
Figure 7 illustrates a flowchart with steps for handling operational data of an energy system, according to embodiments of the invention;

### Detailed description of embodiments

In the following, embodiments of the invention will be described in detail with reference to the accompanying drawings. It is to be understood that the following description of embodiments is not to be taken in a limiting sense. The scope of the invention is not intended to be limited by the embodiments described hereinafter or by the drawings, which are taken to be illustrative only.

The drawings are to be regarded as being schematic representations and elements illustrated in the drawings are not necessarily shown to scale. Rather, the various elements are represented such that their function and general purpose become apparent to a person skilled in the art. Any connection or coupling between functional blocks, devices, components, modules or other physical or functional units shown in the drawings or described herein may also be implemented by a direct or indirect, connection or coupling. A coupling between components may be established wired or over a wireless connection. Functional blocks, computing devices, nodes, or entities may be implemented in hardware, firmware, software, or a combination thereof.

Hereinafter, various techniques with respect to employing a device, in particular a computing device, for handling operational data of an energy system are described.

As a general rule, a distributed database may refer to any database implemented in a network, which is at least partly stored redundantly on several network nodes remote from each other. Blockchain technology may comprise a plurality of blocks comprising data related to transactions and/or Smart Contracts. Chaining of different blocks may be implemented by cryptographic hash values stored in each block, wherein each hash value may refer to data of a previous block.

The distributed database may be implemented using a distributed ledger. An example of a distributed ledger is the blockchain. Hereinafter, various techniques will be primarily described with respect to an implementation using the blockchain, for sake of simplicity. However, similar techniques may be readily applied to other kinds and types of distributed ledgers. A blockchain is a replicated distributed ledger that verifies and stores transactions occurring in a peer-to-peer network. A blockchain does normally not rely on the operations of any central trusted authority. Instead, its trustworthiness is derived from the blockchain algorithm and optionally incentive mechanisms for processing nodes in the network. Blockchains provide a decentralized protected mechanism of storing transactions. Examples of transactions include crypto currency, smart contracts, and data in an internet of things application. The blockchain protects its entries in the respective distributed database (blocks) and the corresponding log of transactions against manipulations by using cryptography. A block carries a set of transactions. Each block points to its previous block by using a hash of the previous block. Because of this, manipulating a block by changing the information is not possible or only possible to a limited degree.

In other words, a blockchain-based database may refer to any database implemented within the energy system, which is at least partly based on the blockchain technique. The blockchain may comprise a plurality of blocks comprising data related to transactions and/or Smart Contracts. Chaining of different blocks may be implemented by cryptographic hash values stored in each block, wherein each hash value may refer to data of a previous block.

An energy system may refer to any set of nodes, which enables a plurality of participants to supply energy to, or consume energy from, the energy system. The energy system may be a public network or a private energy system. The energy system may be connected to at least one further energy system. The energy system may irreversibly process the operational data based on blockchain techniques. In an example for an energy system, one or more wind turbines may be referred to as a wind farm.

A node of an energy system may refer to a participant of the energy system, such as an electrical generator in the energy system or an electrical consumer in the energy system. In particular, a node may refer to any industrial application, like a generator, a power plant, or an energy consumer, such as an industrial production system or device, as well as an energy storage facility or device, within the energy system.

Operational data may comprise any data, which is collected or measured during operation of the respective generator, including but not limited to performance data of the generator, such as power output, load, and other parameters or data describing the operation or output, or sensor data describing the ambient environment influencing the generator output or the natural resources used by the generator.

It is to be appreciated, that the expression "comprising one or more selected from the group consisting of" may refer to comprising any one element from the group, or comprising any combination of the elements of the group, or comprising all elements from the group.

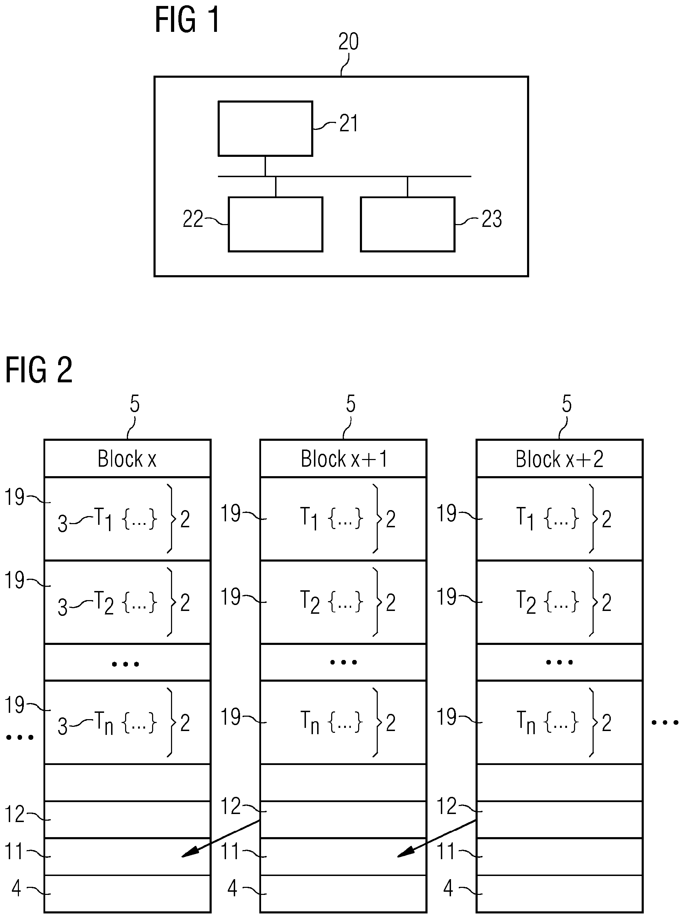

Figure 1 illustrates a schematic drawing of a device 20, according to embodiments of the invention.

Turning to Figure 1, a device 20 configured for handling operational data of an energy system is depicted comprising a memory 23 and at least one processing unit 22. The memory 23 contains instructions executable by said at least one processing unit 22, wherein execution of the instructions causes the device 20 execute the following steps. Operational data 1 of a node of an energy system is obtained of each of the plurality of predetermined time intervals. The operational data 1 is stored in the distributed database 7 for each of the plurality of predetermined time intervals. Therein, the operational data 1 of each of the plurality of predetermined time intervals comprises time data 4 identifying the respective time interval. According to various examples, the device 20 can be separate from the node, or can be included in the node. The device 20 may include an interface 21, or data communication module, which may be configured to receive operational data from the node and communicate with the distributed database 7.

According to various examples, the distributed database may be a decentral database, and further may have one or more of the following properties.

The database may be connected to the decentral power plants and may store relevant data directly from the turbines. This ensures immutability and reliability of the data.

Further, historical data may be available within the distributed database in addition and possibly marked as "historical" to enable users to differentiate between data.

Based on the available data mentioned it is possible to setup a platform for the exchange of this wind data (Data trading platform) between owners / operators of existing wind farms and developers of future wind farms.

In the following, a decentralized database according to embodiments of the invention will be described.

A technical implementation of the database may be a blockchain. There are many different technicalities, which define a specific blockchain. According to the invention, the chain is not owned, or operated, by one central party, but rather an open or semi-open system in which interested parties may participate.

The blockchain may be a private blockchain or a public blockchain, i.e. the blockchain may be open to everybody or private. Private means that access is restricted. According to preferred embodiments, the blockchain is a private blockchain in which every interested person may get access to the blockchain, i.e. read access, but only some certified parties are allowed to create new blocks.

For example, the public Ethereum blockchain, or any other public blockchain, may be used, but should be avoided for cost reasons. Each write request is creating costs. This is not the case for a private chain. For a private blockchain, the only costs are created for maintaining some computational resources to host the blockchain.

Blockchain data blocks 5, or in other words blocks, may be created by sealers or miners, depending on system setup. If a "proof of work" consensus is applied, a mathematical riddle needs to be solved to be elected as next block creator. This block creator is called miner. If a "proof of authority" consensus is applied, only a group of so-called sealers is allowed to create new blocks. No mathematical riddle needs to be solved. One authority needs to define which parties are allowed to create new blocks. Once an initial setup is started, the group of sealers may decide to allow new sealers or ban a sealer. Different voting mechanisms may be applied, e.g. veto rights may be ensured.

Conventionally, an OEM stores data still in the traditional way, wherein operational data acquisition is performed on each turbine for each sensor and operational data is stored at the turbine and transferred to OEM data centers. According to the present disclosure, a secondary improved data storage for wind turbine data in a blockchain is created, in order to enable data transfer between parties. Preferred sensors are wind speed, wind direction, electrical power, ambient temperature, and/or air density. A preferred data-averaging period is 10 min, as in any ordinary SCADA system. Preferred statistical measures of the above sensor data are mean, standard deviation, min, and max. Other site characteristics measured or provided by sensors may include, but are not limited to: wind rose, wind speed distribution, wind shear, wind turbulence, air pressure, active power, reactive power, and other sensor data related to or describing the used natural resources and the relevant ambient environment.

In other words, a wind turbine owner may provide SCADA data to demonstrate site conditions over a specific time interval, wherein the SCADA data may comprise in general sensor data acquired by sensors of a technical system may further comprise operation parameters, such as performance data, in particular active power and/or reactive power. The operational data may comprise component data of components, which are used within the node, or used in the technical system of the node, such as component manufacturer, component type, and/or unique identification numbers of these.

Figure 2 illustrates a schematic drawing of data block 5 interconnection in a blockchain, according to embodiments of the invention.

Turning to Figure 2, a plurality of blockchain data blocks 5 are depicted, which are chained to each other in a blockchain, as known to a person skilled in the art. In particular, a blockchain data block 5 comprises a plurality of transactions 19. Each transaction 19 corresponds to operational data 1 of nodes T1 to Tn of an energy system. The operational data 1 of each node comprises node identity data 3 and sensor data 2. The sensor data 2 may comprise a wind speed mean value, a wind direction mean value among other sensor values. Each data block 5 further comprises a hash of the previous data block 12, a hash of the current data block 11, and time data 4, in particular a timestamp.

As can be seen in Figure 2, data is stored in a blockchain, wherein the blocks are interlinked. Therein, block time, i.e. the time interval between two blocks, corresponds to data acquisition time. In particular, preferred block time is 10 min or close to 10 min for alignment with SCADA data acquisition. So every 10 min a new block is mined/sealed. The techniques for mining and sealing with regard to consensus protocols are well known to a person skilled in the art and will be described in the following. In other words, the operational data one of a node, or a plurality of nodes, is stored subsequently in a distributed database, as it is generated.

Wind turbine data of each turbine is stored. T1 to Tn refer to transaction 1 to transaction n, wherein each transaction represents a dataset for one specific turbine and timestamp. The two parameters, turbine id and timestamp, create an ID column, which makes the data identifiable.

In the following blockchain storage and ownership will be explained in further detail. Since individual wind turbine data may be encrypted, there is no risk of making the blockchain publicly available. In various embodiments, a platform provider has an instance of the blockchain and an OEM, who performs data acquisition, acts as miner/sealer of block.

In the following, blockchain immutability will be described. If a node is venomous and wants to change values of the blockchain at block x it would require changing all subsequent blocks and mine/seal them again, because of interlinkage of blocks. More than that, the attacker is only one instance in a larger group of miners/sealers. There are N-1 other owners who have then a different blockchain. Thus, it is technically unfeasible to change the history of blockchain. Due to this mechanism, the required trust between parties is created.

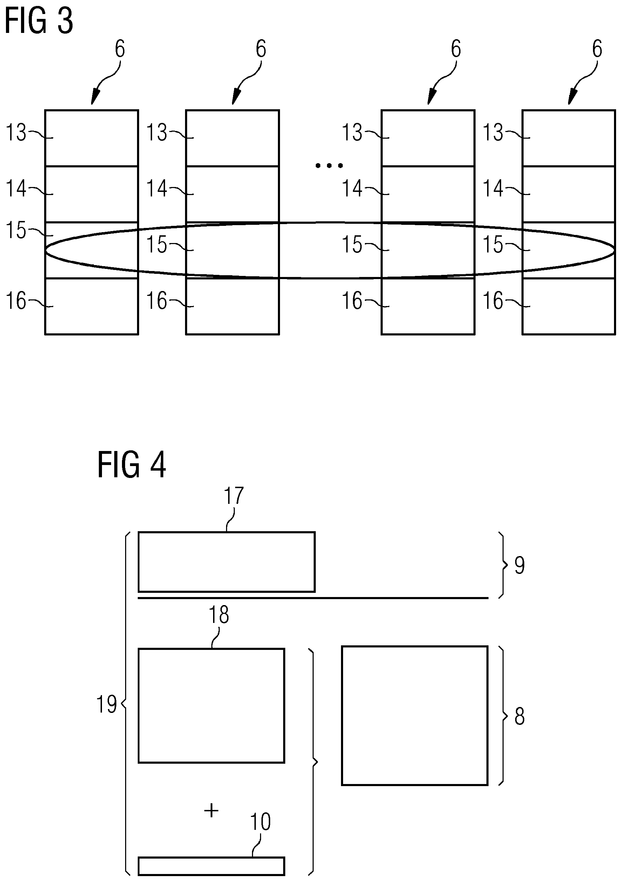

Figure 3 illustrates a schematic drawing of consensus finding in a distributed database 7, according to embodiments of the invention.

Turning to Figure 3, a consensus protocol will be described. In Figure 3, a plurality of database nodes 6 of a distributed database 7 are depicted. The distributed database 7 can be a common blockchain with a plurality of database nodes 6, wherein the number of database nodes 6 is not limited. Each database node 6 comprises a transaction subsystem 13, a token subsystem 14, a database subsystem 15, and a cryptographic subsystem 16.

Each database node 6 holds a complete instance of the database in database subsystem 15. The circle comprising the database subsystems 15 of all database nodes 6 indicates the consensus between the database nodes 6. A consensus is an agreement of miners/sealers to build a new block. To have an overall consistent database, all parties need to find a consensus for each new data block 5 (in a proof-of-work setup) in database subsystem 15.

There are different ways of coming to a consensus. A first concept may be a Proof-of-Authority concept. Therein, there may be a pool of parties who are allowed to create new blocks. Only these, so called sealers, may extend the blockchain. A second concept may be a Proof-of-Work concept. Therein, miners create new blocks. A mathematical riddle has to be solved and only the winner is allowed to create the next block. The riddle is not easily solved and its complexity is adapted to computational power of participating miners. That is done in a way that complexity is adjusted so that riddle is solved after block time or close to block time, in our case after 10 min. In preferred embodiments, a proof-of-authority setup is used.

Figure 4 illustrates a schematic drawing of data encryption in a distributed database 7, according to embodiments of the invention.

As can be seen in Figure 4, general information 17 including location data such as a longitude, latitude, and time data, such as a time stamp, and specification data, such as a hub height, is included as unencrypted data 9. Further, within plain text 18 values such as air density, shape parameters, a shear coefficient, the turbine type, wind speed upflow data, wind speed, and similar sensitive sensor data 2 is included in the transaction 19. The plain text 18 is encrypted using a symmetrical encryption algorithm with an autogenerated key 10 to encrypted data 8. In other words, the encrypted data 8 of each time interval is encrypted using separate, or different, autogenerated key 10, which is generated for each time interval, and therefore for each blockchain data block 5. In various examples, the data owner may use the same key, or a set of keys, to encrypt operational data in all blocks. Accordingly, each blockchain data block corresponds to operational data of a single time interval, wherein part of the operational data 1 is encrypted. In some embodiments, the encryption algorithm may be a DES algorithm, wherein the mode may be CBC, wherein the output encoding may be Base64.

In the following, data encryption will be described in more detail for a specific use case. In a preferred embodiment, wind turbine data is available in encrypted form for every owner of blockchain, but only the owner of the turbine will be able to decrypt the data. This feature will increase acceptance of the solution significantly due to high data security and data privacy. There are two ways of encryption, which are synchronous and asynchronous encryption. For example, asynchronous encryption may be used, in which turbine data is encrypted with a public key of the data owner, i.e. the turbine owner. Data decryption can then only be performed with private key of data owner. However, this way, only the owner may decrypt the data and data exchange is not easily possible. This setup allows OEMs, which acquire the data, to encrypt it, and store the encrypted data to the blockchain. Accordingly, the only requirement is that the data owner provides its public key to OEM, which does not pose a security risk.

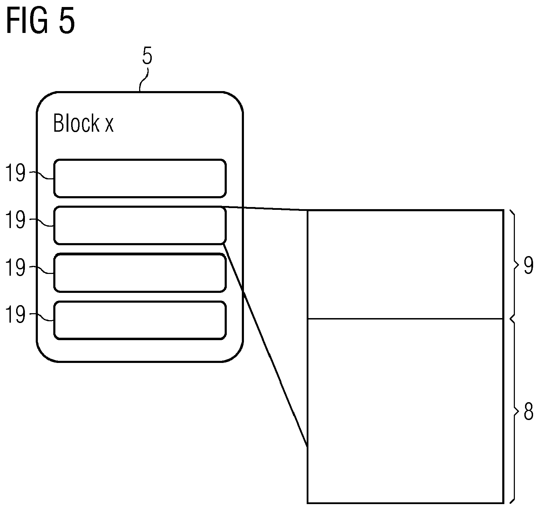

Figure 5 illustrates a further schematic drawing of data encryption in a distributed database 7, according to embodiments of the invention.

Turning to Figure 5, a blockchain data block 5 is depicted containing a plurality of transactions 19. In each transaction 19 operational data 1 of a respective node of an energy system is included, wherein the operational data includes unencrypted data 9, and encrypted data 8 as a cypher text, including sensor data 2, as described for Figure 4.

According to various embodiments, wherein data exchange is a required feature, a workflow of data storage and transfer will be described in detail in the following.

Owner O owns some assets - wind turbines that permanently record data. This data is stored encrypted on blockchain.

Buyer B wants to buy the assets or just the data. B contacts O, negotiates on the price and both find an agreement.

One essential feature is that individual data per wind turbine and timestamp is addressable. This requires each dataset to have an individual key. When data is stored to blockchain, it is encrypted symmetrically with a autogenerated key, initially only known by the owner of the data. This data is stored to the blockchain. When the owner wants to sell data, he provides the block address, transaction number, and autogenerated key to the buyer.

The turbine permanently acquires data. O has the ownership of this data. This data is unencrypted (plain text and general information). Only sensor data will be encrypted. General information like location (longitude, latitude, hub height) will not be encrypted, because B needs to crawl the blockchain to find suitable data. This is especially helpful for a use case like "New-Site Conditions".

Based on an encryption algorithm, a cypher text is generated. Requirements are an autogenerated key, an algorithm (with details like mode and output encoding). This is the data that will be stored to the blockchain. Since all sensor and performance data in the blockchain is encrypted, it is not critical to provide access to the blockchain to any interested party, wherein the unencrypted data (longitude, latitude, hub height, timestamp) is relevant for possible customers to identify useful data. Within the distributed database the data is stored as a JSON object.

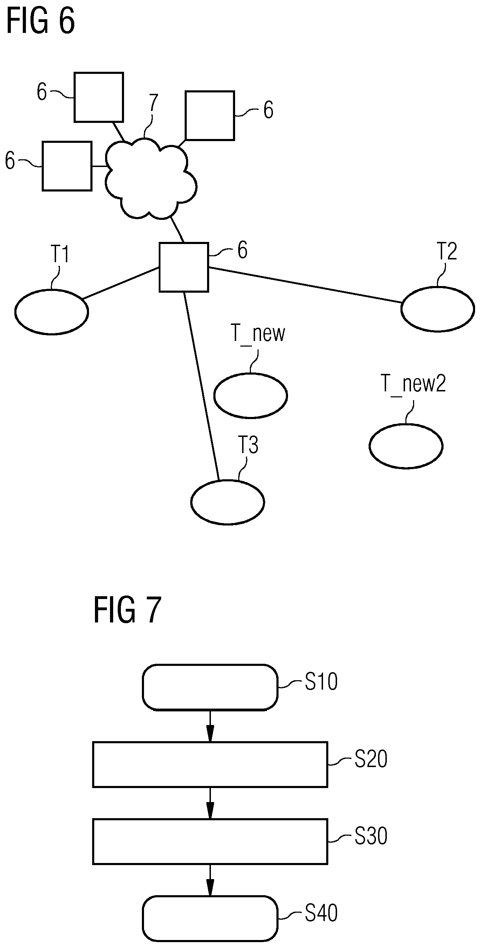

Figure 6 illustrates a schematic drawing of an energy system, according to embodiments of the invention.

Turning to Figure 6, a plurality of nodes (T1, T2, T3) of an energy system are connected to database node 6, which is configured for performing a method for handling operational data of the energy system according to the invention. In various embodiments, database node 6 is a device 20, as depicted in Figure 1, according to embodiments of the invention.

Database node 6 is connected to a distributed database 7, likewise, other database nodes 6 can also be connected to the distributed database 7.

According to various examples, an energy system, a service provider platform, in particular a computer program product, may have one or more of the following properties or characteristics.

The platform enables finding suitable data for a data requestor, as additional properties, like geographical information, are stored with reference to a node (T1, T2, T3) of the energy system, in the specific use case to a wind turbine. Thus, interested parties may for example fetch data from the blockchain and interpolate wind conditions for other sites.

As can be seen in Figure 6, for three existing turbines T1, T2, T3, it is possible to interpolate wind conditions for a new site T new based on the data stored in blockchain. In other examples, extrapolating the data to a new location T new2 is possible as well.

The platform enables matching of a data owner and a data requestor. Data relevant for a requestor may be extracted from the distributed database. The data may be decrypted after successful transaction.

Further, the platform provides a pricing mechanism. There needs to be an incentive for data owners to provide their data to others. That might be monetary, so that the owner is compensated once somebody else used his operational data.

Blockchains are often used to transfer money (cryptocurrencies like Bitcoin). The technical solution according to this disclosure enables transferring data in exchange for credits/money. This may be established with a system-inherent cryptocurrency. Therefore, also a crypto currency configured for handling operational data of an energy system may be provided. The price may be determined automatically; based on demand (for a certain region), and further based on the amount of data, data quality and further data properties. Also, the data owner may set a price.

Storing the data in a blockchain is relevant to create trust. However, it needs to be ensured, that only valid data is added, as explained above. The "certified" sealers of new blocks need to perform some data validation to avoid wrong data from being added.

Certified sealers assure to avoid Denial-of-Service (DoS) attacks. This means that not a single party is adding massive amounts of data to the blockchain, which would then overload network and storage capacity.

A possible solution may be a central instance, e.g. a platform provider, or some specified instances to act as interfaces for storing the data to the blockchain. A possible software solution (a platform) may be the central working place for all participants.

The platform may have a frontend for authentication of participants, finding relevant data, linking owner and interested buyer of data, encrypt/decrypt data, and the like.
The platform may bundle all functionality, e.g. authentication of users, data encryption/decryption, writing/reading to and from the blockchain, matching owners and interested buyers of data, searching data within the blockchain, exchanging data, managing access rights - and similar functionalities as described in the present disclosure.

According to various examples, for matching a data owner and a data buyer, a buyer may use the platform to find most useful datasets. The buyer may add required location information. The tool may then provide most relevant data. The tool may further generate a list of most useful data based on distance from target location to existing turbines, additionally it may take hub height data and wake situations into account to come to a weighting.

Depending on credentials, access rights to modules of the platform may be provided. These may enable or disable certain functionalities.

Accordingly, by the inventive concept of the present disclosure, a technical solution is provided which facilitates a business case previously not feasible. Further, the business case may be based on different payment models for the software product, such as pay per use or software purchase.

As a general rule, the operational data 1, in particular sensor data 2, of a node of an energy system may be collected on-site at the node and may be stored locally at the node. In various embodiments, the node stores the operational data 1, calculates the hash value of the operational data and forwards to a database node 6, which can be a network node, only the hash value of the operational data and general information, such as location data specification data and time data. The hash value of the operational data is then stored by the database node into a distributed database, in order to be able to verify that the operational data stored locally has not been manipulated. In other embodiments, the node forwards the complete operational data to be stored in a distributed database to database node 6. Database node 6 may store the complete data in a distributed database 7, or may store only a reduced data set as described above into the distributed database and store the complete operational data locally at the database node 6.

Figure 7 illustrates a flowchart with steps for handling operational data of an energy system, according to embodiments of the invention.

The method starts with step S10. In step S20, operational data 1 of the node of an energy system is obtained of each of a plurality of predetermined time intervals. In step S30, the operational data 1 of the node is stored in a distributed database 7 for each of the plurality of predetermined time intervals. Therein, the operational data 1 of each of the plurality of predetermined time intervals comprises time data identifying the respective time interval. The method ends with step S40.

Summarizing, a device configured for handling operational data of an energy system is provided, wherein the operational data of one or more node of the energy system is collected for a plurality of predetermined time intervals, and stored in a distributed database including a timestamp for each of the time intervals.

Thereby, the handling of operational data, according to the invention, has a low risk of being manipulated. Accordingly, data security and reliable data storage may be improved, and the data availability for retrieving data from the database at a later point of time may be faster, compared to conventional techniques of handling operational data in an energy system, so that the respective operational data will may be relied upon by third parties and may, therefore, even be traded as a good in a platform or marketplace. This may result in low-risk mark-ups, optimized node set up, and/or optimal performance of nodes in an energy system.

Although the invention has been shown and described with respect to certain preferred embodiments, in particular with respect to wind turbines, equivalents and modifications will occur to others skilled in the art upon the reading and understanding of the specification. The present invention includes all such equivalents and modifications and is limited only by the scope of the appended claims.

Techniques have been described with regard to operational data of wind turbines, in particular wind turbine generators. As a general rule, the principles according to the present disclosure may be applied to various other nodes, or participants in an energy system, such as power plants or generators, in particular in the field of renewable energies, or to an electrical consumer, as obvious for a person skilled in the art. For example, the principles may be applied to, but are not limited to: wind farms, power plants, electrical generators, solar generators, photovoltaic panels, hydropower or geothermal turbines/generators/power plants, and in general generators/plants in the field of renewable energies dependent on varying natural resources, and further for example to a private or industrial consumer in the energy system, such as a power accumulator or an electrical pump.

## Claims

1. Device configured for handling operational data of an energy system, the device (20) comprising a memory (23), and at least one processing unit (22), the memory (23) containing instructions executable by said at least one processing unit (22), wherein execution of the instructions causes the device (20) to execute the following steps:
- obtaining operational data (1) of a node of an energy system of each of a plurality of predetermined time intervals; and
- storing, for each of the plurality of predetermined time intervals, the operational data (1) in a distributed database (7) ;
wherein the operational data (1) of each of the plurality of predetermined time intervals comprises time data (4) identifying the respective time interval.

2. Device according to claim 1, wherein the operational data (1) of each of the plurality of predetermined time intervals comprises:
- sensor data (2), which is measured by at least one sensor, included in, or arranged at, the node, in each of the plurality of predetermined time intervals; or
- a hash value of the sensor data (2).

3. Device according to one of the preceding claims, wherein the operational data (1) each of the plurality of predetermined time intervals further comprises one or more selected from the group comprising:
- a node identity (3) uniquely identifying the node,
- location data identifying the geographical location of the node in the time interval, and
- specification data describing the technical specifications of a technical system of the node.

4. Device according to one of claims 2 or 3, wherein the sensor data (2) includes information about the ambient environment of the node in the time interval, and/or the electrical performance of the node in the time interval.

5. Device according to one of the preceding claims, wherein the time data (4) comprises at least one timestamp.

6. Device according to one of the preceding claims, wherein the operational data (1) of each of the plurality of predetermined time intervals is stored independently of each other in the distributed database, in particular each at a different point of time.

7. Device according to one of the preceding claims, wherein the node is a wind turbine generator.

8. Device according to one of claims 2 to 7, wherein the sensor data (2) comprises one or more selected from the group consisting of: wind speed data, wind direction data, ambient temperature data, and air density data.

9. Device according to one of the preceding claims, wherein the operational data (1) of each of the plurality of predetermined time intervals includes one or more of mean, standard deviation, minimum, and maximum, of the operational data over the respective time interval.

10. Device according to one of the preceding claims, wherein the operational data (1) comprises SCADA data of the node.

11. Device according to one of the preceding claims, wherein the plurality of predetermined time intervals are consecutive time intervals, specifically equal time intervals, more specifically the time intervals are 10 minutes.

12. Device according to one of the preceding claims, wherein the distributed database (7) is a distributed ledger, specifically a blockchain based database comprising at least one blockchain.

13. Device according to one of the preceding claims, wherein the operational data (1) includes encrypted data (8) and unencrypted data (9), wherein the unencrypted data (9) includes one or more of: a node identity (3), location data, specification data, and time data (4), and wherein the encrypted data (8) includes the sensor data (2).

14. Device according to one of claims 15 or 16, wherein the encrypted data (8) in each blockchain data block (5) is encrypted with an autogenerated key (10) using a synchronous encryption algorithm, in particular a separate key is generated automatically for each blockchain data block (5).

15. Method for handling operational data of an energy system, comprising:
- obtaining operational data (1) of a node of the energy system for each of a plurality of predetermined time intervals; and
- storing, for each of the plurality of predetermined time intervals, the operational data (1) in a distributed database (7) ;
wherein the operational data (1) of each of the plurality of predetermined time intervals comprises time data (4) identifying the respective time interval.

16. Method for handling operational data of an energy system, further comprising the features of one of claims 2 to 14.

17. System comprising a plurality of nodes (T1, T2, T3) and at least one device (20) according to one of claims 1 to 14.

18. System for data exchange, comprising a distributed database 7 and configured for carrying out the method according to one of claims 15 or 16.

19. Computer program product, comprising program code which can be executed by at least one processor, wherein executing the program code causes the at least one processor to perform one of the methods for handling operational data of an energy system according to one of claims 15 or 16.
